# EUROPÄISCHE PATENTSCHRIFT

(11) **EP 3 874 575 B1**
(45) Veröffentlichungstag und Bekanntmachung des Hinweises auf die Patenterteilung: **18.02.2026**
(21) Anmeldenummer: 19791239.7
(22) Anmeldetag: 22.10.2019
(51) Int. Cl.: B60L 53/12, B60L 53/22, H02J 50/12, H02M 3/00, H02M 3/335, H02M 7/5387, H02J 7/02, H02M 7/797

(54) **VORRICHTUNG ZUR ENERGIEVERTEILUNG**
APPARATUS FOR DISTRIBUTING ENERGY
DISPOSITIF DE DISTRIBUTION D'ÉNERGIE

(30) Priorität: 29.10.2018 DE 102018218455
(43) Veröffentlichungstag der Anmeldung: 08.09.2021
(73) Patentinhaber: Robert Bosch GmbH, 70442 Stuttgart (DE)
(72) Erfinder: SCHUMANN, Philipp, 70469 Stuttgart (DE); BRAEUCHLE, Moritz, 72141 Walddorfhaeslach (DE)
(86) Internationale Anmeldenummer: PCT/EP2019/078663
(87) Internationale Veröffentlichungsnummer: WO 2020/088982

(56) Entgegenhaltungen:
- EP-A1- 2 434 604
- WO-A1-2019/020803
- WO-A1-2019/157623
- WO-A2-2015/192133
- CN-A- 106 849 291
- CN-U- 206 004 371
- DE-A1- 102013 201 637
- DE-T5- 112015 001 844
- GB-A- 2 346 744
- US-A- 5 291 383
- CHIH-CHIANG HUA ET AL: "LLC resonant converter for electric vehicle battery chargers", IET POWER ELECTRONICS, vol. 9, no. 12, 5 October 2016 (2016-10-05), UK, pages 2369 - 2376, XP055652246, ISSN: 1755-4535, DOI: 10.1049/iet-pel.2016.0066

## Beschreibung

Die vorliegende Erfindung betrifft eine Vorrichtung zur Energieverteilung, insbesondere als Ladevorrichtung für Energiespeicher, insbesondere für Kraftfahrzeuge.

Um ein Kraftfahrzeug mit einem elektrischen Antriebssystem, wie einem Elektrofahrzeug betreiben zu können ist es notwendig die im Kraftfahrzeug mitgeführte elektrische Batterie aufzuladen. Dazu ist in dem Kraftfahrzeug eine Ladevorrichtung angeordnet, mit welcher die an einer Ladestation bereitgestellte Energie zur Speicherung in der Batterie angepasst wird. Um eine Kraftstoffersparnis zu erzielen, ist es bei Hybridfahrzeugen ebenfalls von Vorteil, wenn die Batterie des Kraftfahrzeugs über eine Ladevorrichtung vor Fahrtantritt aufgeladen ist.

### Stand der Technik

Aus der GB 2 346 744 A und der WO 2015/192133 A2 sind Spannungswandler zur Energieverteilung bekannt.

Aus der DE 10 2011 083 020 A1 ist eine Ladevorrichtung bekannt, mit welcher ein Kraftfahrzeug mit voneinander unterschiedlichen elektrischen Energiequellen koppelbar ist. Die Energiequellen können dabei unterschiedlich starke Ströme bei unterschiedlichen Spannungen liefern. Ferner können die Energiequellen Gleichstrom oder Wechselstrom liefern.

Hintergrund der Erfindung liegt darin, dass, um an vielen verschiedenen Lademöglichkeiten laden zu können, eine Ladevorrichtung notwendig ist, die mit mehreren Energiequellen verbindbar ist. Eine solche Ladevorrichtung benötigt jedoch für alle Hochvolt-Komponenten eigene Geräte mit eigener Kühlung und eigene Hochvolt-Anschlüsse. Zumal muss eine Hochvolt-Verteilung an allen Geräten vorgesehen werden und jedes mit Hochvolt verbundene Gerät muss aufwändigen Isolationstests unterworfen werden. Dadurch wird die Herstellung solcher Ladevorrichtungen aufwändig und teuer.

Es ist daher die Aufgabe der vorliegenden Erfindung, eine Vorrichtung zur Energieverteilung, insbesondere als Ladevorrichtung anzugeben, welche einfacherer und dadurch wirtschaftlicher herstellbar ist.

### Offenbarung der Erfindung

Die Aufgabe wird ausgehend von einer Vorrichtung zur Energieverteilung, insbesondere als Ladevorrichtung, mit den Merkmalen von Anspruch 1 gelöst. Hinsichtlich eines Kraftfahrzeuges mit einer solchen Vorrichtung wird auf Anspruch 8 verwiesen. Die jeweils rückbezogenen abhängigen Ansprüche geben vorteilhafte Weiterbildungen der Erfindung wieder.

Die erfindungsgemäße Vorrichtung zur Energieverteilung, insbesondere als Ladevorrichtung für Batterien, insbesondere für Kraftfahrzeuge, weist eine Halbleiter-Vollbrücke und einen ersten Resonanzkreis auf, wobei die Halbleiter-Vollbrücke gleichstromseitig mit einem Energiespeicher verbindbar ist und wechselspannungsseitig an einem ersten Phasenanschluss und an einem zweiten Phasenanschluss mit dem ersten Resonanzkreis verbunden ist, wobei der erste Resonanzkreis mindestens einen ersten Transformator umfasst, wobei der erste Transformator aus einer ersten Resonanzdrossel des ersten Resonanzkreises und einer induktiv gekoppelten ersten Sekundärspule ausgebildet ist und die Anschlüsse der ersten Sekundärspule eine erste Koppelstelle ausbilden, so dass an der ersten Koppelstelle eine weitere Energiequelle oder Energiesenke ankoppelbar ist.

Die Halbleiter-Vollbrücke dient der bidirektionalen Übertragung und Wandlung elektrischer Energie von einer Gleichspannungsseite zu einer Wechselspannungsseite oder umgekehrt. Gleichspannungsseitig ist die Halbleiter-Vollbrücke mit einem Energiespeicher verbindbar. Dies ist insbesondere eine Hochvolt-Batterie zur Versorgung eines elektrischen Antriebsstrangs eines Fahrzeugs, insbesondere zur Versorgung der elektrischen Antriebsmaschine eines elektrisch angetriebenen Fahrzeugs. Wechselspannungsseitig ist an die Vollbrücke zwischen einen ersten und einen zweiten Phasenanschluss ein Resonanzkreis angeschlossen. Ein elektrischer Resonanzkreis oder Schwingkreis ist insbesondere eine resonanzfähige elektrische Schaltung aus mindestens einer Resonanz-Induktivität, -Spule oder - Drossel und mindestens einer Resonanz-Kapazität oder einem -Kondensator, die elektrische Schwingungen ausführen kann. Der Resonanzkreis umfasst einen Transformator, wobei eine erste Resonanzdrossel des Resonanzkreises als Primärspule des Transformators ausgebildet ist. Der Transformator umfasst weiter eine induktiv gekoppelte erste Sekundärspule. Somit umfasst der Resonanzkreis einen Tranformator zur galvanisch getrennten Energieübertragung von Resonanzdrossel zur Sekundärspule und umgekehrt. Über die Anschlüsse der ersten Sekundärspule, also die erste Koppelstelle, kann somit galvanisch getrennt Energie in den Resonanzkreis ein oder aus dem Resonanzkreis ausgespeist werden. Insbesondere kann somit der Energiespeicher geladen werden oder die Energie des Energiespeichers zur Versorgung von elektrischen Lasten, die an die Koppelstelle angeschlossen werden, verwendet werden. Je nach Bedarf können Energiequellen oder Energiesenken an die Koppelstelle angeschlossen werden. An den Anschlüssen der Sekundärspule liegt Wechselspannung an. Spannungswandler zur Wandlung der Wechselspannung in Gleichspannung oder in eine andere Spannungslage sind bekannt und anschließbar um jegliche Gleichspannungsquellen, Gleichspannungssenken, Wechselspannungsquellen oder Wechselspannungssenken anzuschließen. Vorteilhaft wird eine elektrische Schaltung mit einem modifizierten Resonanzkreis bereitgestellt, die eine Energieübertragung von einer anschließbaren Gleichspannungsquelle zu einer anderen elektrischen Energiequelle oder Energiesenke und umgekehrt ermöglicht.

In einer anderen Ausgestaltung der Erfindung umfasst der erste Transformator eine zweite Sekundärspule, und die Anschlüsse der zweiten Sekundärspule bilden eine zweite Koppelstelle aus, so dass an der zweiten Koppelstelle eine zusätzliche Energiequelle oder Energiesenke ankoppelbar ist.

Der Transformator umfasst zwei Sekundärspulen. So werden zwei galvanisch getrennte Energieübertragungen aus dem Resonanzkreis auf je eine Sekundärspule oder umgekehrt bereitgestellt. Die Anschlüsse der zweiten Sekundärspule bilden eine zweite Koppelstelle aus, die individuell parallel zu der ersten Koppelstelle genutzt werden kann. Vorteilhaft wird eine elektrische Schaltung mit einem modifizierten Resonanzkreis bereitgestellt, die eine Energieübertragung von einer anschließbaren Gleichspannungsquelle zu anderen elektrischen Energiequellen oder Energiesenken und umgekehrt ermöglicht.

In einer anderen Ausgestaltung der Erfindung umfasst der erste Resonanzkreis eine Reihenschaltung aus der ersten Resonanzdrossel des ersten Transformators und einer ersten Übertragerspule.

Der Resonanzkreis umfasst neben dem Transformator eine in Reihe mit dem Transformator geschaltete erste Übertragerspule, welche zur induktiven Ankoppelung der Vorrichtung an eine externe Übertragerspule ausgebildet ist. Die Vorrichtung aus Halbleiter-Vollbrücke und dem Resonanzkreis mit der ersten Übertragerspule bildet insbesondere eine Ladeschaltung aus. Diese Ladeschaltung ist für den Einsatz als Ladegerät für induktives Laden oder kabelloses Laden des Energiespeichers vorgesehen. Somit ergibt sich eine für induktives Laden und Entladen geeignete Schaltung über die erste Übertragerspule bei Vorhandensein einer externen Übertragerspule, beispielsweise auf einem Parkplatz eines Fahrzeugs. Zusätzlich ermöglicht die Schaltung mittels dem in den Resonanzkreis eingekoppelten Transformator auch das Verteilen der Energie aus dem Energiespeicher oder aus der externen Übertragerspule auf weitere galvanisch getrennte, an den Koppelstellen angeschlossene, Energiequellen oder Energiesenken, Verbraucher oder Lasten. Somit kann diese Schaltung die Funktionalität einer sonst zusätzlich notwendigen Gleichspannungswandlerschaltung zwischen Hochvoltnetz, beipielsweise mit einer Spannung von 300 Volt, und Bordnetz, beispielsweise mit 12 Volt, ersetzten. Weiter kann diese Schaltung die Funktionalität eines sonst zusätzlich notwendigen Ladegerätes, eines On-Board-Chargers, ersetzen, welcher extern vorhandene Wechselspannung auf die Gleichspannung des Hochvoltnetzes wandelt. Weiter kann diese Schaltung die Funktionalität einer sonst zusätzlich notwendigen Schaltung für die Anbindung eines Gleichspannungsladegerätes ersetzen, welche extern vorhandene Gleichspannung an das Fahrzeugnetz sicher ankoppelt und die Spannung auf die des Hochvoltnetzes wandelt. Vorteilhaft wird eine elektrische Schaltung mit einem modifizierten Resonanzkreis bereitgestellt, die eine Energieübertragung von einer anschließbaren Gleichspannungsquelle zu einer Vielzahl anderer elektrischer Energiequellen oder Energiesenken und umgekehrt ermöglicht. Vorteilhaft werden die Bauteile der Halbleiter-Vollbrücke und des Resonanzkreises nicht nur für eine Ladeschaltung genutzt sondern auch für die Koppelung weiterer Energiequellen bzw. Energiesenken. Da insbesondere die galvanisch getrennte Ankoppelung stets niederspannungsseitig erfolgt, ist kein erhöhter Isolationsaufwand für jede der jeweiligen angekoppelten Schaltungen notwendig. Dies führt zu einer erheblichen Reduktion von Bauelementen, Bauraum und Kosten. Darüber hinaus entfallen auch aufwändige Isolationstests, die bei einem parallelen Anschluss weiterer Schaltungen an den Energiespeicher zum Anschluss von Energiequellen oder Energiesenken notwendig wären.

In einer anderen Ausgestaltung der Erfindung umfasst der erste Resonanzkreis einen Kurzschlussschalter, der einerseits an einer ersten Phase der Halbleiter-Vollbrücke an der von der Halbleiter-Vollbrücke entfernten Seite der ersten Resonanzdrossel angeschlossen ist und andererseits an einer zweiten Phase der Halbleiter-Vollbrücke angeschlossen ist.

Es wird ein Resonanzkreis bereitgestellt mit einem Kurzschlussschalter. Der Kurzschlussschalter ermöglicht die Abtrennung eines Bereichs der Reihenschaltung der Resonanzkreises. Somit können weitere, in der Reihenschaltung des Resonanzkreises befindliche Bauelemente, insbesondere die erste Übertragerspule, abgetrennt oder kurz geschlossen werden. Ein Energiefluss zu oder von den abgetrennten Bauelementen wird somit verhindert. Dadurch wird die Energieübertragung über die erste Übertragerspule bei offenen Kurzschlusschalter angeschaltet und bei geschlossenen Kurzschlussschalter abgeschaltet.

In einer anderen Ausgestaltung der Erfindung umfasst der erste Resonanzkreis eine Reihenschaltung aus der ersten Resonanzdrossel des ersten Transformators, der ersten Übertragerspule und einem zweiten Transformator. Der zweite Transformator ist aus einer zweiten Resonanzdrossel des ersten Resonanzkreises und einer induktiv gekoppelten zweiten Sekundärspule ausgebildet. Insbesondere umfasst der erste Resonanzkreis einen Kreuzschalter, der einerseits an einer ersten Phase der Halbleiter-Vollbrücke beiderseits der ersten Resonanzdrossel angeschlossen ist und andererseits an einer zweiten Phase der Halbleiter-Vollbrücke beiderseits der zweiten Resonanzdrossel angeschlossen ist.

Der Resonanzkreis umfasst eine Reihenschaltung aus erstem Transformator, der ersten Übertragerspule und einem zweiten Transformator, wobei jeweils die Resonanzdrosseln des Resonanzkreises die Primärspulen des ersten und des zweiten Transformators ausbilden. Vorteilhaft wird eine Schaltung bereitgestellt, die über den zweiten Transformator weitere Koppelstellen zur Energieübertragung ausbildet. Weiter wird das Schwingen des Resonanzkreises optimiert, wenn zwei Resonanzdrosseln vorgesehen werden. Insbesondere ist ein Kreuzschalter vorgesehen, welcher einerseits an der ersten Phase der Halbleiter-Vollbrücke beiderseits der ersten Resonanzdrossel angeschlossen ist und andererseits an der zweiten Phase der Halbleiter-Vollbrücke beiderseits der zweiten Resonanzdrossel angeschlossen ist. Dieser Kreuzschalter ermöglicht abhängig von der benötigten Koppelstelle, eine der Resonanzdrosseln und oder die erste Übertragerspule zu überbrücken, so dass lediglich die gewünschten Bauelemente eingekoppelt werden können und zur Energieübertragung genutzt werden können. Die überbrückten Bauelemente werden abgeschaltet und nicht zur Energieübertragung genutzt. Vorteilhaft kann mittels des Kreuzschalters die benötigte Koppelstelle eingekoppelt und die nicht benötigte Koppelstelle ausgekoppelt werden.

In einer anderen Ausgestaltung der Erfindung ist die Halbleiter-Vollbrücke als Teil einer B6-Brücke ausgebildet und bildet wechselspannungsseitig den ersten Phasenanschluss und den zweiten Phasenanschluss an der B6 Brücke aus.

Die Halbleiter-Vollbrücke ist als Teil einer B6-Brücke ausgebildet. Aufgrund des zahlreichen Einsatzes von B6 Brücken als Spannungswandler sind diese als Module in großer Stückzahl verfügbar. Vorteilhaft wird daher zur Umsetzung der Halbleiter-Vollbrücke ein B6-Brücken-Modul verwendet, wobei zwei Halbbrücken für die Schaltung und Ausbildung des ersten und zweiten Phasenanschlusses verwendet werden. Vorteilhaft werden verfügbare Module für die Umsetzung der Schaltung bereitgestellt.

In einer anderen Ausgestaltung der Erfindung ist ein zweiter Resonanzkreis mit einer zweiten Übertragerspule einerseits an einem dritten Phasenanschluss der B6-Brücke und andererseits an dem zweiten Phasenanschluss der B6-Brücke angeschlossen.

Es wird eine Schaltung mit einer B6 Brücke bereitgestellt, wobei an dem ersten und zweiten Phasenanschluss der erste Resonanzkreis und an dem zweiten und dritten Phasenanschluss ein zweiter Resonanzkreis mit einer zweiten Übertragerspule angeschlossen wird. Mittels der Schalter der B6 Brücke kann der erste oder zweite Resonanzkreis angeschaltet oder abgeschaltet werden. Vorteilhaft werden keine weitere Schalter zum selektiven anschalten oder abschalten eines der Resonanzkreise benötigt.

Die Erfindung umfasst weiter ein Kraftfahrzeug, insbesondere Automobil, mit der erfindungsgemäßen Vorrichtung, insbesondere mit einem Energiespeicher, insbesondere einem Hochvolt-Energiespeicher, welcher mit der Vorrichtung gekoppelt ist. Ein solches Kraftfahrzeug weist daher die zu der Vorrichtung genannten Vorteile auf.

Ausführungsbeispiele der Erfindung sind in der Zeichnung dargestellt und in der nachfolgenden Beschreibung näher erläutert. Es zeigt:
- Figur 1: Blockdiagramm eines Beispiels einer Verwendung einer erfindungsgemäßen Vorrichtung zur Energieverteilung,
- Figur 2: Schaltplan eines ersten Ausführungsbeispiels der erfindungsgemäßen Vorrichtung zur Energieverteilung,
- Figur 3: Schaltplan eines zweiten Ausführungsbeispiels der erfindungsgemäßen Vorrichtung zur Energieverteilung,
- Figur 4: Schaltplan eines dritten Ausführungsbeispiels der erfindungsgemäßen Vorrichtung zur Energieverteilung, und
- Figur 5: Schaltplan eines vierten Ausführungsbeispiels der erfindungsgemäßen Vorrichtung zur Energieverteilung.
- Figur 6: Fahrzeug mit einer Vorrichtung zur Energieverteilung

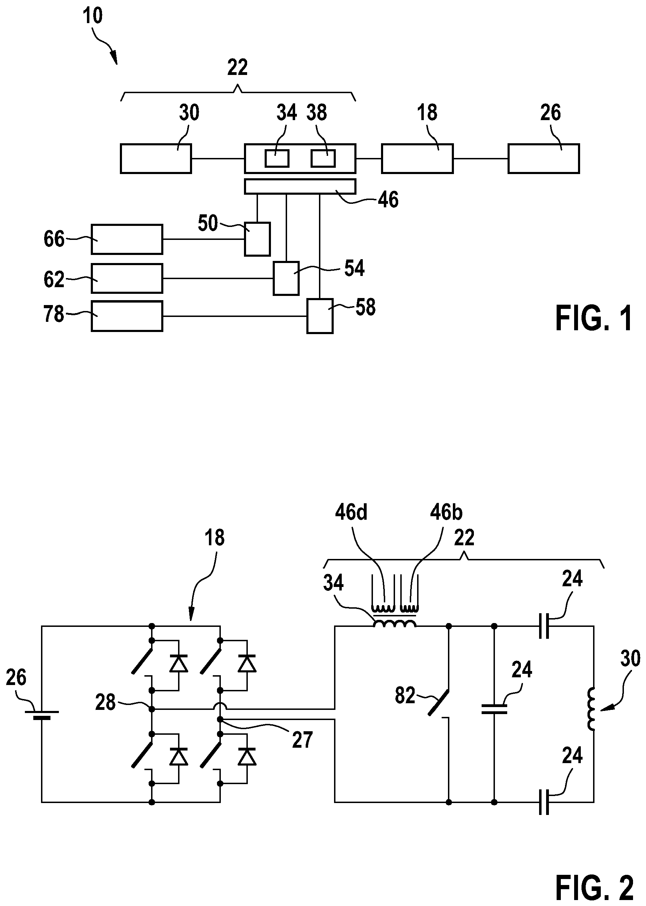

Figur 1 zeigt ein Blockdiagramm eines Beispiels einer Verwendung einer erfindungsgemäßen Vorrichtung 10 zur Energieverteilung. Die Vorrichtung 10 in Figur 1 weist eine Halbleiter-Vollbrücke 18 und einen ersten Resonanzkreis 22 auf. Die Halbleiter-Vollbrücke 18 ist dabei beispielhaft mit einem Energiespeicher 26 und dem ersten Resonanzkreis 22 elektrisch verbunden. Der erste Resonanzkreis umfasst beispielhaft Transformatoren, welche aus den Resonanzdrosseln 34, 38 des Resonanzkreises und mehreren Sekundärspulen 46 gebildet werden. Die Anschlüsse der Sekundärspulen 46 bilden mehrere Koppelstellen 50, 54, 58 aus, an die weitere Energiequellen oder Energiesenken 62, 66, 78 koppelbar sind. Alle Koppelstellen 50, 54, 58 sind über die Halbleiter-Vollbrücke 18 mit dem Energiespeicher 26, welche beispielsweise als Hochvolt-Batterie ausgebildet ist, verbindbar. Der erste Resonanzkreis 22 umfasst insbesondere eine erste Übertragerspule30 zur induktiven Aufnahme oder Abgabe elektrischer Energie. Mittels des Resonanzkreis 22 aus Transformatoren und erster Übertragerspule sowie der Halbleiter-Vollbrücke 18 wird insbesondere eine Schaltung zum induktiven Laden und Entladen eines Energiespeichers ausgebildet. Über die Koppelstellen 50, 54, 58 kann beispielsweise Energie einer Wechselspannungsquelle 62, einer Gleichspannungsquelle 66 in den Resonanzkreis eingekoppelt oder ausgekoppelt werden und insbesondere dem Energiespeicher 26 zugeführt oder entnommen werden. Die Wechselspannungsquelle 62 und die Gleichspannungsquelle 66 können somit beispielsweise zusätzlich zu einer externen Übertragerspule, die mit der ersten Übertragerspule 30 induktiv gekoppelt werden kann, zum Laden des Energiespeichers 26 genutzt werden. Der Energiespeicher 26 kann insbesondere als Energiequelle genutzt werden, um einen an der Koppelstelle 58 angekoppelten Niedervolt-Energiespeicher 78, beispielsweise eines Bordnetzes eines Fahrzeugs, zu laden.

Figur 2 zeigt einen Schaltplan eines Ausführungsbeispiels der Vorrichtung 10 zur Energieverteilung. Die Vorrichtung 10 in Figur 2 weist eine Halbleiter-Vollbrücke 18 und einen ersten Resonanzkreis 22 auf. Die Halbleiter-Vollbrücke 18 ist dabei beispielhaft gleichspannungsseitig mit einem Energiespeicher 26 und wechselspannungsseitig mit dem ersten Resonanzkreis 22 über einen ersten Phasenanschluss 27 und einen zweiten Phasenanschluss 28 elektrisch verbunden. Der erste Resonanzkreis umfasst einen ersten Transformator, welcher aus der Resonanzdrossel 34 des Resonanzkreises und mindestens einer der Sekundärspulen 46d, 46b gebildet wird. Die Anschlüsse der Sekundärspulen 46d, 46b bilden zwei Koppelstellen 54, 58 aus, an die weitere Energiequellen oder Energiesenken 62, 78 koppelbar sind. Alle Koppelstellen 54, 58 sind über die Halbleiter-Vollbrücke 18 mit dem Energiespeicher 26, welche beispielsweise als Hochvolt-Batterie ausgebildet ist, verbindbar. Weiter umfasst der Resonanzkreis 22 insbesondere Kapazitäten 24. Eine Kapazität 24 ist beispielsweise einerseits an der ersten Phase der Halbleiter-Vollbrücke an der von der Halbleiter-Vollbrücke 18 entfernten Seite der ersten Resonanzdrossel 34 angeschlossen ist und andererseits an einer zweiten Phase der Halbleiter-Vollbrücke 18 angeschlossen. Der erste Resonanzkreis 22 umfasst insbesondere eine erste Übertragerspule30 zur induktiven Aufnahme oder Abgabe elektrischer Energie. Mittels des Resonanzkreis 22 bestehend aus erstem Transformator und erster Übertragerspule 30 und der Halbleiter-Vollbrücke 18 wird insbesondere eine Schaltung zum induktiven Laden und Entladen eines Energiespeichers ausgebildet. Insbesondere umfasst der erste Resonanzkreis 22 zwei weitere Kapazitäten 24 die in Reihe vor und hinter der ersten Übertragerspule 30 angeordnet sind. Der Resonanzkreis 22 umfasst bevorzugt weiter einen Kurzschlussschalter 82, der einerseits an einer ersten Phase der Halbleiter-Vollbrücke 18 an der von der Halbleiter-Vollbrücke entfernten Seite der ersten Resonanzdrossel 34 angeschlossen ist und andererseits an dem zweiten Phasenanschluss der Halbleiter-Vollbrücke angeschlossen ist. Somit ist ein Betrieb der benötigten Sekundärspulen 46b, 46d möglich, wobei bei geschlossenem Kurzschlussschalter 82 die erste Übertragerspule 30 kurzgeschlossen wird und ein Energiefluss über die erste Übertragerspule 30 unterbunden wird.

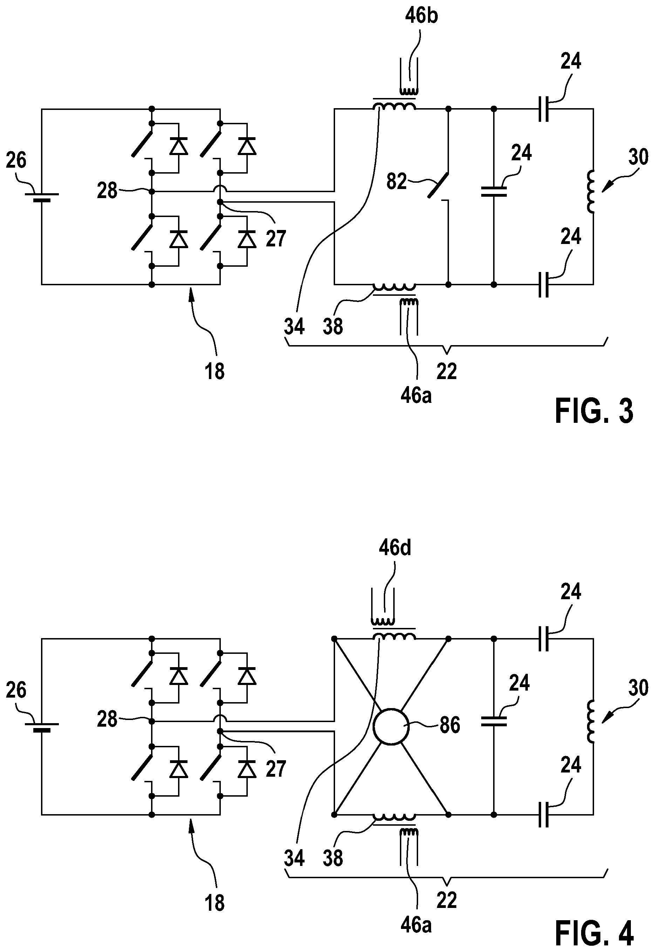

In Figur 3 ist ein Schaltplan eines zweiten Ausführungsbeispiels der Vorrichtung 10 zur Energieverteilung gezeigt. In diesem Ausführungsbeispiel besteht der Resonanzkreis 22 aus einer Reihenschaltung des ersten Transformators, der Übertragerspule 30 und eines zweiten Transformators. Der erste Transformator ist aus der ersten Resonanzdrossel 34 und der ersten Sekundärspule 46b und der zweite Transformator ist aus einer zweiten Resonanzdrossel 38 und der zweiten Sekundärspule 46a ausgebildet. Insbesondere umfasst der Schwingkreis zwei Kapazitäten 24, die in Reihe jeweils zwischen die Übertragerspule 30 und einen Transformator geschaltet sind. Insbesondere ist eine dritte Kapazität 24 zwischen die von der ersten Übertragerspule 30 entfernten Anschlüsse der zwei Kapazitäten 24 geschaltet. Ein Kurzschlusschalter 82 wird insbesondere einerseits an einer ersten Phase der Halbleiter-Vollbrücke 18 an der von der Halbleiter-Vollbrücke entfernten Seite der ersten Resonanzdrossel 34 angeschlossen und andererseits an einer zweiten Phase der Halbleiter-Vollbrücke an der von der Halbleiter-Vollbrücke entfernten Seite der zweiten Resonanzdrossel 38 angeschlossen. Somit ist ein Betrieb der benötigten Sekundärspulen 46a und 46b möglich, wobei bei geschlossenem Kurzschlussschalter 82 die erste Übertragerspule 30 kurzgeschlossen wird und ein Energiefluss über die erste Übertragerspule 30 unterbunden wird.

Figur 4 zeigt einen Schaltplan eines dritten Ausführungsbeispiels der Vorrichtung 10 zur Energieverteilung. Dieses Ausführungsbeispiel unterscheidet sich von dem aus Figur 3 dadurch, dass statt des Kurzschlusschalters 82 ein Kreuzschalter 86 vorgesehen ist. Der Kreuzschalter 86 ist einerseits an einer ersten Phase der Halbleiter-Vollbrücke 18 beiderseits der ersten Resonanzdrossel 34 angeschlossen und andererseits an einer zweiten Phase der Halbleiter-Vollbrücke 18 beiderseits einer zweiten Resonanzdrossel 38 angeschlossen. Dies ermöglicht abhängig von der benötigten Koppelstelle, eine der Resonanzdrosseln 34, 38 und oder die erste Übertragerspule 30 zu überbrücken. So ist lediglich das Bauelement, also insbesondere eine der Resonanzdrosseln 34, 38 oder die Übertragerspule 30, welches nicht überbrückt wird eingekoppelt und damit angeschaltet. Vorteilhaft kann ausgewählt werden, welcher Teil der Reihenschaltung des Resonanzkreises 22, insbesondere welche der Resonanzdrosseln 34, 38 oder die erste Übertragerspule 30, zur Energieübertragung verwendet werden sollen.

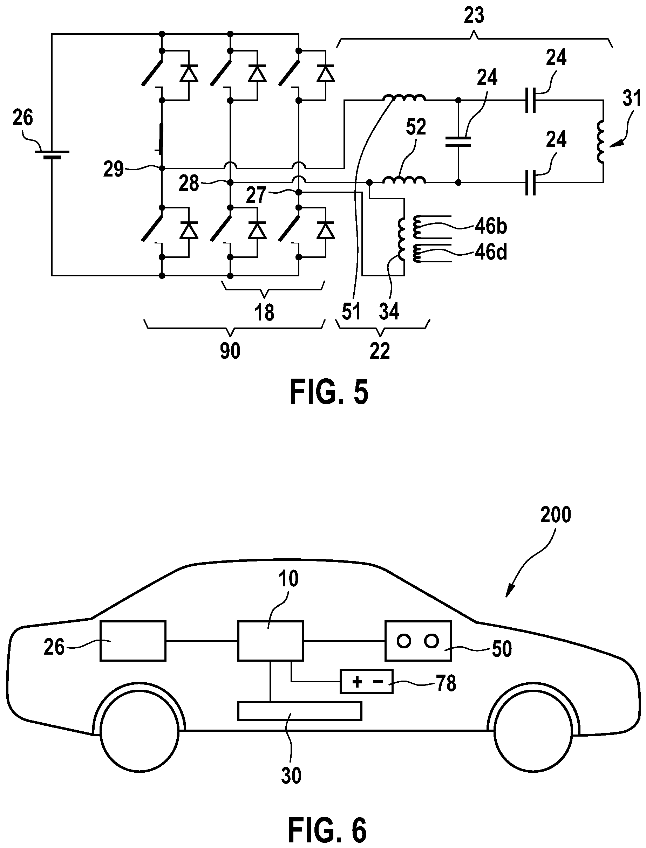

Figur 5 zeigt einen Schaltplan eines vierten Ausführungsbeispiels der Vorrichtung 10 zur Energieverteilung. Bei diesem Ausführungsbeispiel wird die Halbleiter-Vollbrücke 18 als Teil einer B6-Brücke 90 ausgebildet. Der erste Resonanzkreis 22 mit einem ersten Transformator ist an dem ersten Phasenanschluss 27 und dem zweiten Phasenanschluss 28 der B6-Brücke 90 angeschlossen. Der erste Transformator ist aus der Resonanzdrossel 34 des Resonanzkreises 22 und mindestens einer der Sekundärspulen 46d, 46b gebildet. Der erste Resonanzkreise 22 umfasst insbesondere Kapazitäten 24, die in der Zeichnung nicht dargestellt sind. Insbesondere ist die B6-Brücke an dem dritten Phasenanschluss 29 und dem zweiten Phasenanschluss 28 mit einem zweiten Resonanzkreis 23 verbunden. Der zweite Resonanzkreis umfasst insbesondere eine Reihenschaltung aus einer dritten Resonanzdrossel 51, einer Kapazität 24, einer zweiten Übertragerspule 31, einer weiteren Kapazität 24 und einer vierten Resonanzdrossel 52, wobei eine weitere Kapazität 24 zwischen die von der zweiten Übertragerspule entfernten Anschlüsse der zwei Kapazitäten 24 geschaltet ist. Die Verwendung der Kombination der Halbleiter-Vollbrücke 18 mit der weiteren Halbleiter-Halbbrücke der B6-Brücke 90 mit zwei Resonanzkreisen hat den Vorteil, dass für die Auswahl des für die Energiewandlung zu verwendenden Transformators kein zusätzlicher Kurzschlussschalter 82 oder Kreuzschalter 86 benötigt wird.

Die Figur 6 zeigt ein Fahrzeug 200 mit einer Vorrichtung 10 zur Energieverteilung, die mit einem Energiespeicher 26 verbindbar ist. Die Vorrichtung 10 ermöglicht die Energieverteilung beispielsweise zwischen den an sie angeschlossenen Komponenten, beispielsweise einem Ladeanschluss oder Entladeanschluss des Fahrzeugs 50 an eine externe Energiequelle, einem Niedervoltenergiespeicher 78 eines Bordnetzes oder einer Übertragerspule 30, die zum induktiven Laden oder Entladen verwendet werden kann.

## Patentansprüche

1. Vorrichtung (10) zur Energieverteilung, insbesondere als Ladevorrichtung für Batterien, insbesondere für Kraftfahrzeuge, wobei die Vorrichtung (10) eine Halbleiter-Vollbrücke (18) und einen ersten Resonanzkreis (22) aufweist, wobei die Halbleiter-Vollbrücke (18) gleichstromseitig mit einem Energiespeicher (26) verbindbar ist und wechselspannungsseitig an einem ersten Phasenanschluss (27) und an einem zweiten Phasenanschluss (28) mit dem ersten Resonanzkreis (22) verbunden ist,
wobei der erste Resonanzkreis (22) mindestens einen ersten Transformator umfasst,
wobei der erste Transformator aus einer ersten Resonanzdrossel (34) des ersten Resonanzkreises (22) und einer induktiv gekoppelten ersten Sekundärspule (46d) ausgebildet ist und die Anschlüsse der ersten Sekundärspule (46d) eine erste Koppelstelle (58) ausbilden, so dass an der ersten Koppelstelle (58) eine weitere Energiequelle (78) oder Energiesenke (78) ankoppelbar ist,
**dadurch gekennzeichnet, dass**
der erste Resonanzkreis (22) eine Reihenschaltung aus der ersten Resonanzdrossel (34) des ersten Transformators und einer ersten Übertragerspule (30) umfasst.

2. Vorrichtung (10) nach Anspruch 1, **dadurch gekennzeichnet, dass** der erste Transformator eine zweite Sekundärspule (46b) umfasst, und die Anschlüsse der zweiten Sekundärspule (46b) eine zweite Koppelstelle (54) ausbilden, so dass an der zweiten Koppelstelle (54) eine zusätzliche Energiequelle (62) oder Energiesenke (62) ankoppelbar ist.

3. Vorrichtung (10) nach einem der vorherigen Ansprüche, **dadurch gekennzeichnet, dass** der erste Resonanzkreis (22) einen Kurzschlussschalter (82) umfasst, der einerseits an einer ersten Phase der Halbleiter-Vollbrücke (18) an der von der Halbleiter-Vollbrücke entfernten Seite der ersten Resonanzdrossel (34) angeschlossen ist und andererseits an einer zweiten Phase der Halbleiter-Vollbrücke (18) angeschlossen ist.

4. Vorrichtung (10) nach einem der vorherigen Ansprüche, **dadurch gekennzeichnet, dass** der erste Resonanzkreis (22) eine Reihenschaltung aus der ersten Resonanzdrossel (34) des ersten Transformators, der ersten Übertragerspule (30) und einem zweiten Transformator umfasst, wobei der zweite Transformator aus einer zweiten Resonanzdrossel (38) des ersten Resonanzkreises (22) und einer induktiv gekoppelten zweiten Sekundärspule (46a) ausgebildet ist,
und insbesondere einen Kreuzschalter (86) umfasst, der einerseits an einer ersten Phase der Halbleiter-Vollbrücke beiderseits der ersten Resonanzdrossel (34) angeschlossen ist und andererseits an einer zweiten Phase der Halbleiter-Vollbrücke beiderseits der zweiten Resonanzdrossel (38) angeschlossen ist.

5. Vorrichtung (10) nach einem der vorherigen Ansprüche, **dadurch gekennzeichnet, dass** die Halbleiter-Vollbrücke (18) als Teil einer B6-Brücke (90) ausgebildet ist und wechselspannungsseitig den ersten Phasenanschluss (27) und den zweiten Phasenanschluss (28) an der B6 Brücke ausbildet.

6. Vorrichtung (10) nach Anspruch 5, **dadurch gekennzeichnet, dass** ein zweiter Resonanzkreis (23) mit einer zweiten Übertragerspule (31) zwischen einem dritten Phasenanschluss (29) der B6-Brücke (90) und dem zweiten Phasenanschluss (28) der B6-Brücke (90) angeschlossen ist.

7. Kraftfahrzeug, insbesondere Automobil, mit einer Vorrichtung (10) nach einem der vorherigen Ansprüche, mit insbesondere einem Energiespeicher (26), insbesondere einem Hochvolt-Energiespeicher.

## Claims

1. Energy distribution device (10), in particular in the form of a charging device for batteries, in particular for motor vehicles, wherein the device (10) has a semiconductor full-bridge (18) and a first resonant circuit (22), wherein the semiconductor full-bridge (18) is able to be connected on the DC side to an energy storage unit (26) and is connected on the AC side to the first resonant circuit (22) at a first phase connection (27) and at a second phase connection (28),
wherein the first resonant circuit (22) comprises at least a first transformer, wherein the first transformer is formed from a first resonant inductor (34) of the first resonant circuit (22) and an inductively coupled first secondary coil (46d), and the connections of the first secondary coil (46d) form a first coupling point (58) such that a further energy source (78) or energy sink (78) is able to be coupled to the first coupling point (58),
**characterized in that**
the first resonant circuit (22) comprises a series circuit comprising the first resonant inductor (34) of the first transformer and a first transmitter coil (30).

2. Device (10) according to Claim 1, **characterized in that** the first transformer comprises a second secondary coil (46b), and the connections of the second secondary coil (46b) form a second coupling point (54) such that an additional energy source (62) or energy sink (62) is able to be coupled to the second coupling point (54).

3. Device (10) according to either of the preceding claims, **characterized in that** the first resonant circuit (22) comprises a short-circuit switch (82), which, on the one hand, is connected to a first phase of the semiconductor full-bridge (18) on that side of the first resonant inductor (34) that is averted from the semiconductor full-bridge, and, on the other hand, is connected to a second phase of the semiconductor full-bridge (18).

4. Device (10) according to one of the preceding claims, **characterized in that** the first resonant circuit (22) comprises a series circuit comprising the first resonant inductor (34) of the first transformer, the first transmitter coil (30) and a second transformer, wherein the second transformer is formed from a second resonant inductor (38) of the first resonant circuit (22) and an inductively coupled second secondary coil (46a),
and in particular comprises an intermediate switch (86), which, on the one hand, is connected to a first phase of the semiconductor full-bridge on both sides of the first resonant inductor (34), and, on the other hand, is connected to a second phase of the semiconductor full-bridge on both sides of the second resonant inductor (38).

5. Device (10) according to one of the preceding claims, **characterized in that** the semiconductor full-bridge (18) is formed as part of a B6 bridge (90) and, on the AC side, forms the first phase connection (27) and the second phase connection (28) on the B6 bridge.

6. Device (10) according to Claim 5, **characterized in that** a second resonant circuit (23) with a second transmitter coil (31) is connected between a third phase connection (29) of the B6 bridge (90) and the second phase connection (28) of the B6 bridge (90).

7. Motor vehicle, in particular automobile, comprising a device (10) according to one of the preceding claims, comprising in particular an energy storage unit (26), in particular a high-voltage energy storage unit.

## Revendications

1. Dispositif (10) de distribution d'énergie, en particulier sous forme de dispositif de charge pour des batteries, en particulier pour des véhicules à moteur, ledit dispositif (10) comportant un pont complet à semi-conducteurs (18) et un premier circuit résonant (22), le pont complet à semi-conducteurs (18) pouvant être relié, côté courant continu, à un accumulateur d'énergie (26) et étant relié, côté tension alternative, au premier circuit résonnant (22) au niveau d'une première borne de phase (27) et d'une deuxième borne de phase (28),
le premier circuit résonant (22) comprenant au moins un premier transformateur,
le premier transformateur étant composé d'une première bobine d'inductance résonnante (34) du premier circuit résonnant (22) et d'une première bobine secondaire (46d) couplée par induction, et les bornes de la première bobine secondaire (46d) formant un premier point de couplage (58), de sorte qu'une autre source d'énergie (78) ou qu'un autre puits d'énergie (78) peut être couplé au premier point de couplage (58),
**caractérisé en ce que**
le premier circuit résonant (22) comprend un circuit série composé de la première bobine d'inductance résonante (34) du premier transformateur et d'une première bobine de transmission (30).

2. Dispositif (10) selon la revendication 1, **caractérisé en ce que** le premier transformateur comprend une deuxième bobine secondaire (46b), et **en ce que** les bornes de la deuxième bobine secondaire (46b) forment un deuxième point de couplage (54), de sorte qu'une source d'énergie (62) ou qu'un puits d'énergie (62) supplémentaire peut être couplé au deuxième point de couplage (54).

3. Dispositif (10) selon l'une quelconque des revendications précédentes, **caractérisé en ce que** le premier circuit résonnant (22) comprend un commutateur de court-circuit (82) qui, d'une part, est connecté à une première phase du pont complet à semi-conducteurs (18) du côté de la première inductance résonnante (34) éloigné du pont complet à semi-conducteurs et qui, d'autre part, est connecté à une deuxième phase du pont complet à semi-conducteurs (18).

4. Dispositif (10) selon l'une quelconque des revendications précédentes, **caractérisé en ce que** le premier circuit résonant (22) comprend un circuit série composé de la première bobine d'inductance résonante (34) du premier transformateur, de la première bobine de transmission (30) et d'un deuxième transformateur, le deuxième transformateur étant composé d'une deuxième bobine d'inductance résonante (38) du premier circuit résonant (22) et d'une deuxième bobine secondaire couplée par induction (46a),
et comprend en particulier un commutateur croisé (86) qui, d'une part, est connecté à une première phase du pont complet à semi-conducteurs de part et d'autre de la première inductance résonnante (34) et qui, d'autre part, est connecté à une deuxième phase du pont complet à semi-conducteurs de part et d'autre de la deuxième inductance résonnante (38).

5. Dispositif (10) selon l'une quelconque des revendications précédentes, **caractérisé en ce que** le pont complet à semi-conducteurs (18) est réalisé sous la forme d'une partie d'un pont B6 (90) et forme, côté tension alternative, la première borne de phase (27) et la deuxième borne de phase (28) sur le pont B6.

6. Dispositif (10) selon la revendication 5, **caractérisé en ce qu'**un deuxième circuit résonant (23) est connecté à une deuxième bobine de transmission (31) entre une troisième borne de phase (29) du pont B6 (90) et la deuxième borne de phase (28) du pont B6 (90).

7. Véhicule à moteur, en particulier automobile, comportant un dispositif (10) selon l'une quelconque des revendications précédentes, et comportant en particulier un accumulateur d'énergie (26), en particulier un accumulateur d'énergie à haute tension.
